Europäisches Patentamt

European Patent Office

Office européen des brevets

(11) Publication number: 0 342 802
A2

# EUROPEAN PATENT APPLICATION

(21) Application number: 89304083.2

(22) Date of filing: 25.04.89

(51) Int. Cl.⁴: F16L 55/02 , F16L 11/11 , B29C 63/20 , B29C 53/58 , B29C 53/78

(30) Priority: 20.05.88 GB 8811933

(43) Date of publication of application:
23.11.89 Bulletin 89/47

(84) Designated Contracting States:
DE NL SE

(71) Applicant: Smiths Industries Public Limited
Company
765, Finchley Road
London, NW11 8DS(GB)

(72) Inventor: Forbes, Harry
47, Viewmount Drive
Glasgow G20 0LT Scotland(GB)
Inventor: Lander, David Robin
17, Stirling Road
Drymen G63 0BW(GB)
Inventor: Paton, James
57, Montrose Street
Clydebank G81 2PA Scotland(GB)

(74) Representative: Flint, Jonathan McNeill
SMITHS INDUSTRIES PUBLIC LIMITED
COMPANY 765 Finchley Road
London NW11 8DS(GB)

(54) Ducting.

(57) Ducting with sound absorbing properties has a helical channel 21 which opens internally of the ducting. Overlapping opposite edges of a helically wound strip 20 of polyurethane foam are crimped into the channel. An outer sleeve 3 of thermoplastic rubber is shrunk about the outside of the channel and projects beyond it at opposite ends to form an impermeable outer surface of the ducting and flexible cuffs 22. The outer sleeve 3 is assembled by stretching it radially outwardly by means of a vacuum applied outside the sleeve and then allowing it to shrink about the channel 21 and foam assembly placed within it.

FIG.1

# DUCTING

This invention relates to ducting of the kind having a substantially radially rigid helical member.

Ducting is used in many applications and takes many different forms. Commonly, flexible ducting is made of a flexible sheet material formed into a tubular shape and given radial strength by means of a helical reinforcing member.

It is an object of the present invention to provide improved ducting and an improved method of manufacture of ducting.

According to one aspect of the present invention there is provided ducting of the above-specified kind, characterised in that the helical member supports a layer of foam material internally of the ducting and that an outer tubular sleeve of substantially impermeable flexible material is shrunk about the outside of the helical member.

The helical member is preferably a channel, the layer of foam being retained in the channel. The layer of foam may be a helically wound strip, opposite edges of the strip being crimped in the channel. The channel preferably opens internally of the ducting so that the channel is located externally of the layer of foam material. The outer sleeve is preferably of a resilient material having a natural diameter less than the external diameter of the helical member. The outer sleeve may be of thermoplastic rubber. The outer sleeve may project beyond the helical member at one end at least of the ducting so as to form a flexible cuff of the ducting.

According to another aspect of the present invention there is provided a method of making ducting comprising the steps of forming an internal tubular member by retaining opposite edge regions of a helically wound strip of flexible material in a substantially radially rigid helical channel and then shrinking about the internal tubular member an outer tubular sleeve of a substantially impermeable flexible material.

The outer tubular sleeve preferably has a natural diameter less than the external diameter of the helical channel, the outer tubular sleeve being stretched to a diameter greater than the external diameter of the internal tubular member by applying a reduced pressure externally of the outer tubular sleeve prior to shrinking about the internal tubular member.

According to a further aspect of the present invention there is provided a method of making ducting comprising the steps of radially expanding an outer tubular sleeve of a resilient material by applying differential fluid pressure across the wall of the sleeve, inserting a substantially radially rigid helical member within the outer sleeve, the external diameter of the helical member being greater than the natural, unexpanded internal diameter of the outer sleeve, and removing the differential pressure from the outer sleeve so that it shrinks towards its natural diameter about the helical member.

Ducting and a method of manufacture of such ducting, in accordance with the present invention, will now be described, by way of example, with reference to the accompanying drawings, in which:

Figure 1 is a partly sectional side elevation of the ducting;

Figure 2 is an enlarged sectional view of a part of the ducting; and

Figures 3A to 3D illustrate stages in the manufacture of the ducting.

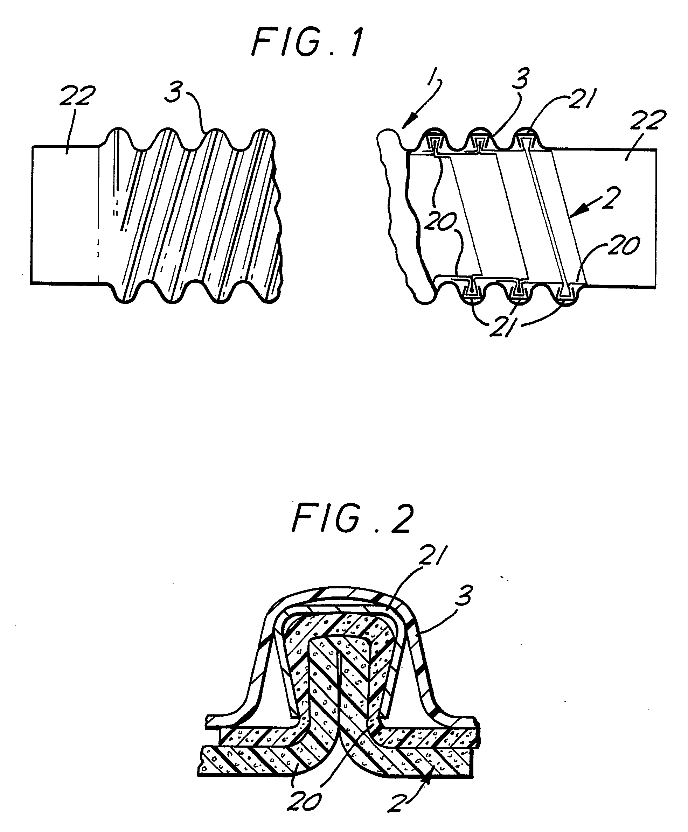

With reference first to Figures 1 and 2, the ducting 1 comprises an internal tubular member 2 about which is shrunk an outer sleeve 3.

The internal tubular member 2 comprises a strip 20 of polyurethane foam which is 25mm wide and 6mm thick. The strip 20 is wound helically and overlapped at its edges which are crimped into and retained by a helical channel 21. The channel 21 opens internally of the ducting and is formed of a metal such as aluminium strip bent into a rectangular section to make the channel rigid radially. The edges of the foam strip 20 preferably project beyond the channel by a short distance as shown in Figure 2. The deformable nature of the polyurethane foam is generally sufficient to ensure that a bulk of material is provided internally of the channel. A filler, such as a wire or cord could, however, be used to reduce further the risk of the strip 20 being pulled out of the channel 21.

The external surface of the ducting is enclosed by the outer sleeve 3 which is of a flexible, gas impermeable, resilient material such as thermoplastic rubber. The outer sleeve 3 has a natural internal diameter of 65mm compared with the external diameter of the internal tubular member 2 of 78mm. The outer sleeve 3 is therefore stretched tightly about the helical channel 21 and contacts the foam strip 20 between the channel. Typically, the internal tubular member 2 is 350mm long with the outer sleeve projecting beyond opposite ends of the internal tubular member by a distance of 50mm to provide flexible cuffs 22 at each end of the ducting 1 by which connection can be made to the ducting. The rigidity of the channel 21 is sufficient to prevent the ducting being collapsed internally by radial pressure from the outer sleeve 3.

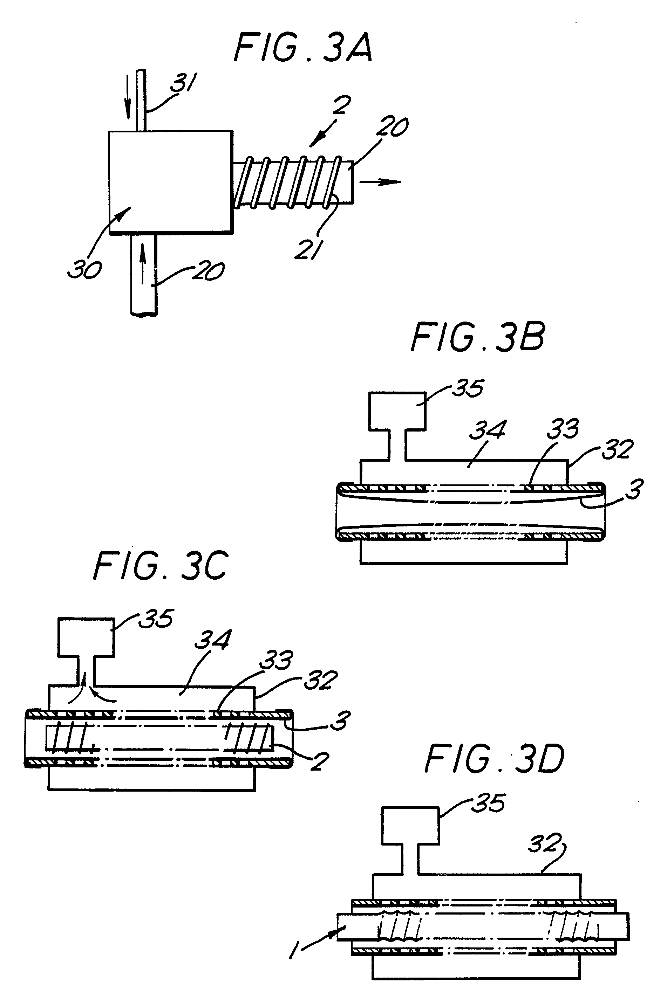

With reference now to Figure 3A, the internal tubular member 2 is made on a machine 30 by forming aluminium strip 31 into the channel 21 and crimping in the foam strip 20. The construction and operation of the machine 30 is not described in detail because it is conventional, as described in the UK Patent No. 1499769 and US Patent No. 4084309. The tubular member 2 emerges from the machine 30 continuously and is cut to give the desired length.

With reference now to Figure 3B, the outer sleeve 3 is inserted in an inflation machine 32. The inflation machine has a perforated metal tube 33 around which extends a vacuum jacket 34 that communicates with a vacuum pump 35. Opposite ends of the sleeve 3 are folded back around the outside of the tube 33, and the pump 35 is turned on so as to reduce the pressure in the vacuum jacket 34 and thereby in the space between the outside of the sleeve 3 and the tube 33. This reduced pressure causes the sleeve 3 to stretch radially until it conforms to the inside of the tube 33, giving the sleeve a stretched diameter of about 80mm, that is greater than that of the internal tubular member 2.

While the vacuum pump 35 is maintained on, the internal tubular member is pushed into the stretched sleeve 3 in the inflation machine 32, as shown in Figure 3C.

The pump 35 is then turned off and the vacuum jacket 34 opened to atmosphere so that the sleeve 3 shrinks inwardly onto the internal member, as shown in Figure 3D. The ducting 1 can then be removed from the inflation machine 32 and the sleeve 3 trimmed to the desired length.

The ducting of the present invention can be of light weight and provide good sound absorption by choice of the appropriate grade and thickness of foam. Because the outer sleeve is continuous and impermeable, the finished ducting can be free from leaks and porosity. Any punctures in the outer sleeve are readily apparent in the inflation machine enabling early rejection of the outer sleeve. The continuous outer sleeve enables connection cuffs to be formed readily at each end and gives increased axial and tear strength compared with conventional spiral wound ducts. The continuous outer surface also reduces the accumulation of dust and dirt on the outside of the ducting and makes cleaning easier.

Various modifications are possible to the ducting. For example, different materials could be used in its construction. The foam layer could be in the form of a tube rather than a strip which is retained between a helical wire inside the foam tube and the outer sleeve. The outer sleeve could be applied to the internal tubular member by heat shrinking. The method of the present invention could be used to apply an outer tubular sleeve to other internal tubular members with a helical member but without an internal layer of foam.

## Claims

1. Ducting having a substantially radially rigid helical member, characterised in that the helical member (21) supports a layer of foam material (20) internally of the ducting (1), and that an outer tubular sleeve (3) of substantially impermeable flexible material is shrunk about the outside of the helical member.

2. Ducting according to Claim 1, characterised in that the helical member is a channel (21), and that the layer of foam (20) is retained in the channel.

3. Ducting according to Claim 2, characterised in that the layer of foam is a helically wound strip (20), and that opposite edges of the strip are crimped in the channel (21).

4. Ducting according to Claim 2 or 3, characterised in that the channel (21) opens internally of the ducting so that the channel (21) is located externally of the layer of foam material (20).

5. Ducting according to any one of the preceding claims, characterised in that outer sleeve (3) is of a resilient material and has a natural diameter less than the external diameter of the helical member (21).

6. Ducting according to Claim 5, characterised in that the outer sleeve (3) is of thermoplastic rubber.

7. Ducting according to any one of the preceding claims, characterised in that the outer sleeve (3) projects beyond the helical member (21) at one end at the least of the ducting so as to form a flexible cuff (22) of the ducting.

8. A method of making ducting comprising the steps of forming an internal tubular member (2) by retaining opposite edge regions of a helically wound strip of flexible material (20) in a substantially radially rigid helical channel (21) and then shrinking about the internal tubular member (2) an outer tubular sleeve (3) of a substantially impermeable flexible material.

9. A method according to Claim 8, characterised in that the outer tubular sleeve (3) has a natural diameter less than the external diameter of the helical channel, and that the outer tubular sleeve (3) is stretched to a diameter greater than the external diameter of the internal tubular member (2) by applying a reduced pressure externally of the outer tubular sleeve (3) prior to shrinking about the internal tubular member (2).

10. A method of making ducting comprising the steps of radially expanding an outer tubular sleeve (3) of a resilient material by applying differential fluid pressure across the wall of the sleeve, inserting a substantially radially rigid helical member (21) within the outer sleeve (3), the external diameter of the helical member (21) being greater than the natural, unexpanded internal diameter of the outer sleeve (3), and removing the differential pressure from the outer sleeve (3) so that it shrinks towards its natural diameter about the helical member (21).

EP 0 342 802 A2

# FIG.1

# FIG.2

# FIG . 3A

# FIG . 3B

# FIG . 3C

# FIG . 3D